Europäisches Patentamt

European Patent Office

Office européen des brevets

(19)

(11) Numéro de publication: **0 382 587**
**A1**

(12) **DEMANDE DE BREVET EUROPEEN**

(21) Numéro de dépôt: **90400075.9**

(22) Date de dépôt: **10.01.90**

(51) Int. Cl.⁵: **B60P 7/12**

(30) Priorité: **10.01.89 FR 8900203**

(43) Date de publication de la demande:
**16.08.90 Bulletin 90/33**

(84) Etats contractants désignés:
**AT BE CH DE DK ES FR GB GR IT LI LU NL SE**

(71) Demandeur: **S.A.T.I. SOCIETE AUXILIAIRE DE TRANSPORTS ET D'INDUSTRIES**
**Tour Aurore, Place des Reflets Cédex 5**
**F-92080 Paris La Défense 2(FR)**

(72) Inventeur: **Laluc, Philippe**
**22 Chemin des Bourgognes**
**F-95000 Cergy Pontoise(FR)**
Inventeur: **Diez, Raphael**
**Rue de l'Abeille, Orval**
**F-18200 Saint-Amand-Montrond(FR)**

(74) Mandataire: **Robert, Jean-Pierre et al**
**CABINET BOETTCHER 23, rue la Boétie**
**F-75008 Paris(FR)**

(54) **Plateau pour véhicule de transport de marchandise muni de dispositifs de calage.**

(57) Un plateau (1) comprend au moins un dispositif de calage pour un objet cylindrique. Ce dispositif comprend deux paires de cales (4) ayant des surfaces de calage (17) définissant un dièdre, qui sont montées pivotantes autour d'un axe parallèle à la direction de déplacement du véhicule de façon à pouvoir être escamotée à volonté sous le plateau (1), par des ouvertures (5) munies de panneaux d'obturation (11). En position de saillie, les cales (4) reposent sur le plateau (1) dans lequel leur base est emboîtée.

Fig.3

EP 0 382 587 A1

## Plateau pour véhicule de transport de marchandise muni de dispositifs de calage.

L'invention a pour objet un plateau pour un véhicule de transport de marchandise muni de dispositifs de calage.

Pour transporter par voie ferroviaire des produits longs et/ou plats (produits sidérurgiques semi finis, par exemple) ainsi que du frêt disposé sur des palettes, on utilise généralement des wagons plats constitués d'un simple plateau monté sur bogies. Les wagons de ce type ne sont pas utilisables dans la pratique pour le transport d'objets de forme cylindrique (bobine de tôles, rouleaux de papier ou autre). Ainsi les wagons plats voyagent-ils souvent à vide (trajet de retour), ce qui se répercute fâcheusement sur le prix du transport ferroviaire.

Le but de l'invention est de réaliser un plateau pour un véhicule de transport de marchandise, tel qu'un wagon plat, pour le transport de produits longs et/ou plats, équipé de moyens pour l'adapter aisément au transport d'objets cylindriques.

Pour atteindre ce but, on prévoit, conformément à l'invention, un plateau comprenant au moins un dispositif de calage pour un objet cylindrique, ce dispositif de calage comportant au moins une paire de cales ayant des surfaces de calage définissant un dièdre, chaque cale étant montée pivotante sur le plateau autour d'un axe parallèle à la direction de déplacement du véhicule pour pivoter entre une première position où elle est escamotée sous le plateau et une deuxième position où elle repose en faisant saillie sur le plateau, le plateau comprenant au moins deux ouvertures obturables par un panneau pour permettre le pivotement des cales.

L'un des intérêts de cet agencement est que les cales, du fait qu'elles reposent sur le plateau quand elles sont dans la deuxième position, peuvent supporter et caler des charges importantes, ce qui ne serait pas le cas si, par exemple, elles étaient en porte-à-faux au-dessus d'une ouverture du plateau.

Selon une caractéristique de l'invention, le plateau comprend au droit de chaque cale un élément de support pour la supporter dans la deuxième position, la cale et l'élément de support correspondant étant munis de moyens d'emboîtement complémentaires.

Grâce à cet agencement, ce sont les moyens d'emboîtement des cales et des éléments de support de cale qui absorbent les contraintes qui s'exercent sur les cales chargées lors des accélérations et de décélérations du véhicule, et non les moyens de pivotement des cales.

Selon une autre caractéristique de l'invention, le plateau comprend des moyens de verrouillage pour verrouiller les cales dans la deuxième position. Le véhicule peut ainsi être déplacé avec les cales dans la deuxième position.

Selon encore une autre caractéristique de l'invention, le plateau comprend deux paires de cales et, en outre, deux cales latérales montées respectivement sur chaque paire de cales. Les cales latérales sont montées mobiles en translation selon un axe perpendiculaire à la direction de déplacement du véhicule.

D'autres caractéristiques et avantages de la présente invention apparaîtront à la lecture de la description qui suit d'un mode de réalisation de l'invention donné à titre d'exemple et sans intentions limitatives. On se reportera aux dessins sur lesquels :

- la figure 1 est une vue de dessus schématique d'une extrémité du plateau selon l'invention ;
- la figure 2 est une vue en coupe schématique, selon la ligne I-I de la figure 1, d'une extrémité du plateau selon l'invention ;
- la figure 3 est une vue en perspective schématique partielle d'un premier dispositif de calage selon l'invention ; et
- la figure 4 est une vue en perspective schématique partielle d'un deuxième dispositif de calage selon l'invention.

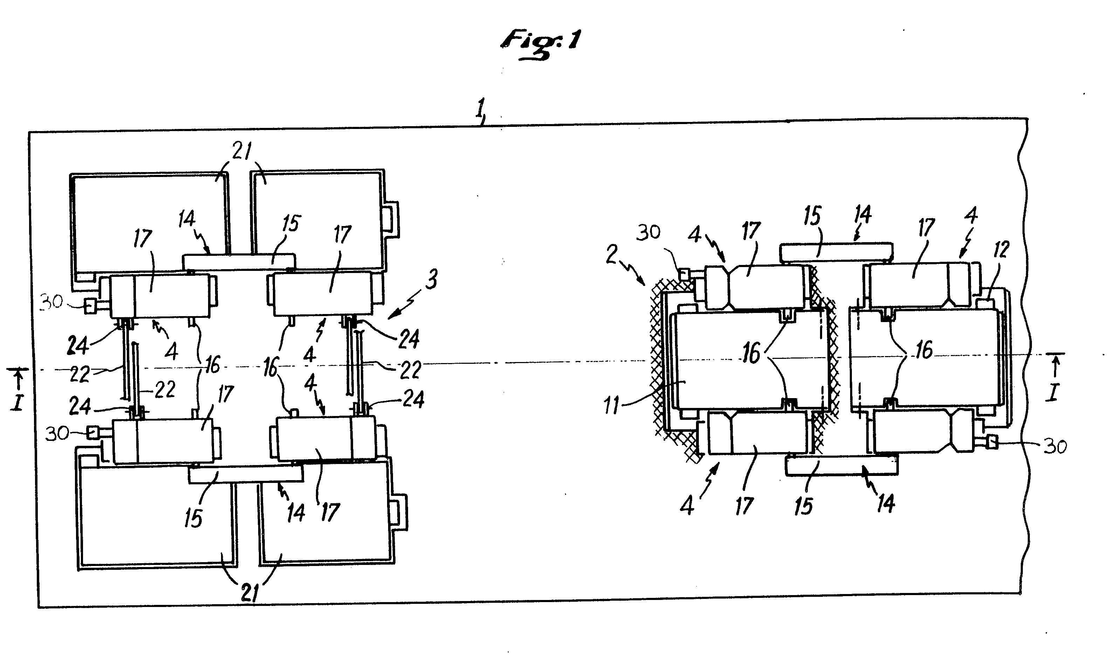

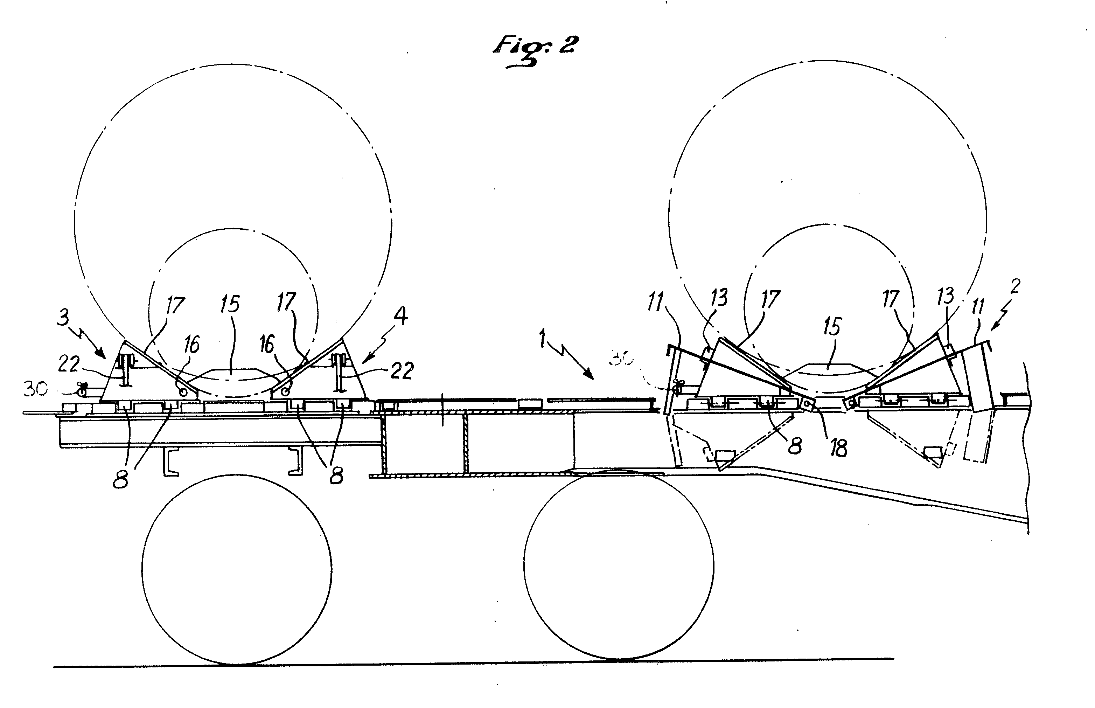

Sur les figures 1 et 2 on a représenté l'extrémité d'un wagon plat comprenant un plateau 1 ayant une face supérieure plane. A cette extrémité de wagon, le plateau 1 comprend deux dispositifs de calage 2, 3 escamotables pour des objets cylindriques. Comme on le verra plus loin dans le détail, ces deux dispositifs sont de conformations différentes, bien que remplissant la même fonction. Ils tirent leur particularités respectives de la position qu'ils occupent sur le plateau 1, l'un de ces dispositifs, repéré par le chiffre de référence 3, étant situé à l'aplomb d'un bogie et l'autre dispositif, repéré par le chiffre de référence 2, étant situé dans une partie du wagon où l'espace sous le plateau 1 est libre.

Le dispositif de calage 2 comprend deux paires de cales 4 disposées en vis-à-vis de part et d'autre de l'axe longitudinal du wagon. Chaque paire de cales définit deux surfaces de calage formant un dièdre dont l'arête est perpendiculaire à la direction de déplacement du wagon. Ces deux paires de cales sont particulièrement appropriées au calage d'objets cylindriques et elles peuvent servir au calage d'objets ayant des diamètres très différents, comme on peut le voir sur la figure 2 où l'on a esquissé, pour chacun des dispositifs de calage 2, 3, le profil de deux rouleaux dont les diamètres sont du simple au double.

Entre les deux paires de cales 4 s'étendent deux ouvertures 5 rectangulaires, pratiquées dans le plateau 1. Chaque cale 4 est montée pivotante sur le plateau 1 par deux charnières 6 dont l'axe est parallèle à la direction de déplacement du wagon et s'étend le long d'un bord longitudinal d'une ouverture 5. Chaque cale 4, qui comprend une surface de calage 17 ayant un revêtement à fort coefficient de frottement, une plaque de caoutchouc par exemple, et une base 7 munie de moyens d'emboîtement 8, peut pivoter entre deux positions. Dans une première position, elle est totalement escamotée par rapport à la surface supérieure du plateau 1, sa base 7 étant alors tournée vers le haut et ses moyens d'emboîtement 8 étant situés au-dessous du niveau de cette surface. Un organe de verrouillage, non représenté, permet de bloquer la cale dans cette position. Dans une deuxième position, où elle passe, à partir de la première position, par un pivotement de l'intérieur vers un bord latéral du wagon, elle est en saillie sur le plateau 1 sur lequel elle repose, le plateau 1 comprenant quatre éléments de support 9, au niveau de sa surface supérieure, pour fournir respectivement une assise aux cales 4. Chaque élément de support 9 est adjacent à un bord longitudinal d'une ouverture 5 et comprend des moyens d'emboîtement 10, complémentaires de ceux de la base 7 d'une cale 4. Sur l'exemple représenté, les moyens d'emboîtement 7 d'une cale 4 sont constitués par deux portions de profilé en U espacées, fixées à la base 7 de la cale, avec leur axe longitudinal perpendiculaire à l'axe des charnières 6 et leur concavité tournée vers la base 7. Les moyens d'emboîtement 10 des éléments de support 9 sont également constitués de portions de profilé de section rectangulaire faisant partie de la structure du plateau 1 et définissant entre elles des logements de section rectangulaire pour loger les moyens d'emboîtement 8 d'une cale 4.

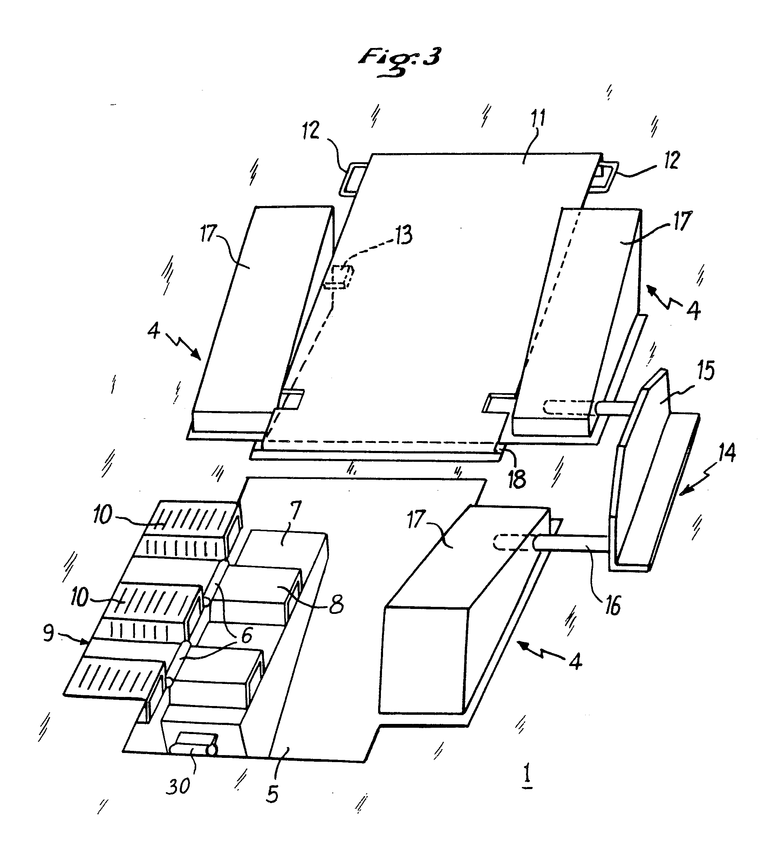

Pour fermer les ouvertures 5 lorsque les cales 4 sont dans la première position, on prévoit deux panneaux rectangulaires 11 montés pivotants sur le plateau 1 autour d'un axe 18 perpendiculaire à la direction de déplacement du wagon (sur la figure 3, on n'a représenté qu'un de ces panneaux afin qu'une cale 4 escamotée en première position soit visible). Les panneaux 11 sont articulés au niveau de leurs côtés situés en vis-à-vis, de sorte qu'ils s'ouvrent en se rabattant l'un vers l'autre. Chaque panneau 11 est muni de poignées 12 fixées sur ses côtés longitudinaux et s'étendant sensiblement dans le plan du panneau. En position fermée, la surface supérieure des panneaux 11 est coplanaire à la surface supérieure du plateau 1.

Pour verrouiller les cales 4 dans la deuxième position, on prévoit avantageusement de se servir des panneaux 11. A cette fin, chaque cale 4 est munie d'un taquet 13 faisant saillie vers l'axe longitudinal du wagon lorsqu'elle est dans la deuxième position. De la sorte, après qu'on a ouvert un panneau 11 et fait passer les deux cales 4 correspondantes de la première à la deuxième position, lorsqu'on rabat le panneau 11 vers l'ouverture 5, il vient en appui sur les taquets 13 respectifs de ces cales dont il entrave le pivotement en les entretoisant.

Ce dispositif de calage 2 comprend également deux cales latérales 14 destinées à maintenir un objet cylindrique au niveau de ses extrémités. Chacune de ces cales 14 comprend une plaque 15 s'étendant parallèlement à l'axe longitudinal du wagon et dont la distance à cet axe est réglable. A cette fin, la plaque 15 est munie de deux tiges de guidage 16 faisant saillie au droit de sa face intérieure et destinées à coulisser dans des fourreaux de section correspondante, prévus respectivement sur les cales 4 d'une paire de cale. Des moyens de verrouillage (non représentés) permettent de bloquer les tiges 16 par rapport aux fourreaux des cales 4 en des positions prédéterminées. Un manchon tubulaire 30 d'axe parallèle à celui d'un desdits fourreaux et de même diamètre est fixé sur une cale 4 de chaque paire de cales, l'entraxe du manchon 30 et du fourreau correspondant étant égal à celui des tiges de guidage 16. Cet agencement permet le rangement aisé de chaque cale latérale 14 par simple enfichage sur une cale 4 munie d'un manchon 30 et son blocage par un organe de verrouillage approprié.

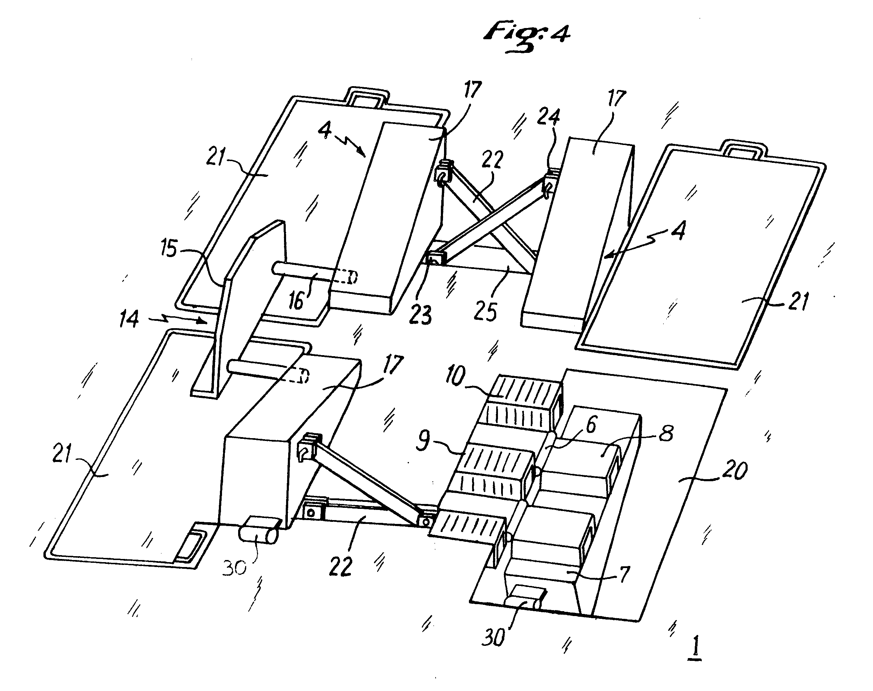

Sur la figure 4, on a représenté le deuxième dispositif de calage selon l'invention. Ce dispositif est prévu pour être installé sur la partie d'un wagon plat située au niveau d'un bogie, c'est-à-dire dans une zone où l'espace médian sous le plateau 1 est occupé et où il ne peut donc être question de faire se rabattre des cales escamotables. Ce dispositif de calage se différencie donc pour l'essentiel de celui qui vient d'être décrit, en ce que ses cales 4, au lieu de passer de la position de saillie (deuxième position) à la position escamotée (première position) en pivotant vers l'axe longitudinal du wagon, le font en pivotant, selon la paire de cales considérée, vers l'un ou l'autre des bords longitudinaux du plateau 1. Ainsi, lors de leur pivotement les cales 4 du dispositif de calage 3 ne balaient pas la zone médiane du wagon. En outre, comme dans la deuxième position elles ont sensiblement le même écartement transversal que les cales 4 du dispositif de calage 2, lorsqu'elles sont dans la première position, leur écartement transversal au lieu de se trouver diminué se trouve augmenté de la largeur de deux cales.

Dans le dispositif de calage 3, le plateau 1 comprend quatre ouvertures rectangulaires 20 disposées respectivement entre chaque cale 4 et le bord latéral le plus proche du plateau 1. Les cales 4 sont montées pivotantes sur le panneau 1 par deux charnières 6 situées le long du bord intérieur de l'ouverture 20 correspondante, les axes de ces charnières étant parallèles à la direction de déplacement du wagon. Ces cales 4 sont par ailleurs semblables aux cales du dispositif de calage 2 décrit plus haut.

Chaque ouverture 20 peut être obturée par un panneau 21 articulé au plateau 1 de façon que les deux panneaux d'une même paire de cale se rabattent l'un vers l'autre en s'ouvrant (sur la figure 4, on n'a pas représenté l'un de ces panneaux pour laisser visible une cale 4 dans la première position). Les panneaux 21 sont munis d'une poignée contenue dans leur plan et ils sont montés sur le plateau 1 de façon que, lorsqu'ils sont fermés, leur surface supérieure soit coplanaire à la surface supérieure du plateau 1.

Pour verrouiller chaque cale 4 dans la deuxième position, on utilise un levier 22 dont une extrémité est articulée à une première patte 23 fixée au plateau 1 et dont l'autre extrémité peut être assujettie à la cale 4 par un organe de verrouillage 24 à rappel élastique faisant saillie sur la cale 4, vers l'intérieur, lorsque cette cale est dans la deuxième position. Les pattes 23, auxquelles sont articulés les deux leviers 22 servant à verrouiller deux cales 4 en regard de part et d'autre de l'axe longitudinal du wagon, sont disposées dans une rainure 25 s'étendant entre lesdites cales, perpendiculairement à l'axe longitudinal du wagon et servant au logement des leviers 22 lorsque les cales 4 sont dans la première position. De la sorte, lorsque les cales 4 sont escamotées et que les panneaux 21 sont fermés, aucun élément du dispositif de calage 3 ne fait saillie à la surface supérieure du plateau 1.

Le dispositif de calage 3 comprend en outre deux cales latérales 14 destinées à maintenir un objet cylindrique au niveau de ses extrémités. La conformation ni le montage de ces cales ne diffèrent des cales correspondantes du dispositif de calage 2 décrit plus haut.

Pour placer en position d'utilisation, en partant de la première position, le dispositif de calage 2, on procède de la manière suivante. On ouvre un panneau 11 que l'on rabat sur l'autre panneau 11. On fait pivoter les deux cales 4 correspondantes dans la deuxième position et on rabat le panneau 11 pour qu'il vienne en appui sur les taquets 13 et verrouille les cales 4. On pratique de même avec le second panneau 11 et les cales 4 correspondantes. On désolidarise chaque cale latérale 14 de la cale 4 sur laquelle elle a été enfichée pour son rangement. On monte une cale latérale 14 sur chaque paire de cale 4 en prévoyant entre les cales 14 un écartement supérieur à la longueur de l'objet que l'on désire caler. Une fois cet objet en place, on règle la position des cales latérales 14.

Pour placer dans la deuxième position les cales 4 du dispositif de calage 3, alors qu'elles sont escamotées, on procède paire de cales par paire de cales. On ouvre un panneau 21 et on fait pivoter dans le deuxième position la cale correspondant à ce panneau, que l'on referme ensuite. On ouvre le panneau 21 en regard du précédent, on fait pivoter la deuxième cale de la paire de cale et on referme le panneau. On pratique de même pour la deuxième paire de cale. On fixe ensuite l'extrémité libre des leviers 22 aux pattes 24 de façon à verrouiller les cales. Enfin, on met les cales latérales 14 en place comme pour le dispositif de calage 2.

L'invention n'est pas limitée aux modes de réalisation qui viennent d'être décrits et elle est susceptible de variantes de réalisation. En particulier, un dispositif de calage pourrait ne comprendre qu'une paire de cales. L'arête du dièdre défini par une paire de cales pourrait être parallèle à l'axe longitudinal du wagon. Lorsque le dispositif comprend quatre cales, l'écartement transversal entre les cales prises deux à deux pourrait être différent.

**Revendications**

1. Plateau (1) pour un véhicule de transport de marchandise, comprenant au moins un dispositif de calage (2,3) pour un objet cylindrique, ce dispositif de calage (2,3) comportant au moins une paire de cales (4) escamotables ayant des surfaces de calage (17) définissant un dièdre, caractérisé en ce que chaque cale (4) est montée pivotante sur le plateau (1) autour d'un axe parallèle à la direction de déplacement du véhicule et s'étendant le long du bord d'une ouverture (5,20), pour pivoter au travers de cette ouverture entre une première position où elle est escamotée sous le plateau (1) et une deuxième position où elle repose en faisant saillie sur une portion de plateau (1), adjacente à l'ouverture et en ce que chaque ouverture (5,20) comporte un panneau d'obturation (11,21).

2. Plateau (1) selon la revendication 1, caractérisé en ce qu'il comprend au droit de chaque cale un élément de support (9) pour la supporter dans sa deuxième position, la cale (4) et l'élément de support correspondant étant munis de moyens d'emboîtement complémentaires (8,10).

3. Plateau (1) selon une des revendications 1 et 2, caractérisé en ce qu'il comprend des moyens de verrouillage (11,13 ; 22,23,24) pour verrouiller les cales (4) dans la deuxième position.

4. Plateau (1) selon la revendication 3 caractérisé en ce qu'il comprend deux paires de cales (4) et quatre ouvertures (20) disposées respectivement entre une cale (4) et le bord longitudinal le plus proche du plateau (1), les moyens de verrouillage comprenant quatre leviers (22) s'étendant entre les cales (4), chaque levier (22) étant articulé au plateau (1) par une de ses extrémités et pouvant être assujetti, de façon démontable, à une cale (4) par son autre extrémité.

5. Plateau (1) selon la revendication 4 caractérisé en ce qu'il comprend des rainures (25) pour loger les leviers (24) quand les cales (4) sont dans la première position.

6. Plateau (1) selon une des revendications 1 à 5, caractérisé en ce que l'arête du dièdre défini par la paire de cales (4) est perpendiculaire à la direction de déplacement du véhicule.

7. Plateau (1) selon la revendication 3 caractérisé en ce qu'il comprend deux paires de cales (4) disposées de part et d'autre de deux ouvertures (5) dont les panneaux d'obturation (11) sont montés pivotants autour d'un axe perpendiculaire à la direction de déplacement du véhicule, chaque cale (4) comprenant un taquet (13) faisant saillie en direction de la cale correspondante de l'autre paire quand elle est dans la deuxième position pour servir d'appui au panneau (11) qui constitue les moyens d'interverrouillage des cales dans leur seconde position.

8. Plateau (1) selon une des revendications 1 à 7 caractérisé en ce qu'il comprend deux paires de cales (4) et deux cales latérales (14) montées respectivement sur chaque paire de cales (4).

9. Plateau (1) selon la revendication 8 caractérisé en ce que les cales latérales (14) sont montées réglables selon un axe perpendiculaire à la direction de déplacement du véhicule.

*Fig.1*

EP 0 382 587 A1

Fig. 2

*Fig. 3*

Fig.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 102 274  (S.L. FEARY et al.) <br> * figures 1,2,8 * <br> --- | 1 | B 60 P    7/12 |
| Y | FR-A-2 581 604  (VEB BANDSTAHLKOMBINAT) <br> * page 5, lignes 32-35; figure 1 * <br> --- | 1 | |
| A | US-A-3 197 236  (R.W. BURTON) <br> * colonne 4, ligne 68 - colonne 5, ligne 14; figures 1-6 * <br> --- | 1 | |
| A | FR-A-2 217 185  (REYNOLDS BOUGHTON LTD.) <br> --- | | |
| A | FR-A-2 411 730  (ALUMINIUM SUISSE) <br> ----- | | |

### DOMAINES TECHNIQUES RECHERCHES (Int. Cl.5)

B 60 P

Le présent rapport a été établi pour toutes les revendications

| Lieu de la recherche | Date d'achèvement de la recherche | Examinateur |
|---|---|---|
| BERLIN | 28-03-1990 | LUDWIG H J |